# EUROPÄISCHE PATENTSCHRIFT

(11) **EP 0 995 349 B1**
(45) Veröffentlichungstag und Bekanntmachung des Hinweises auf die Patenterteilung: **16.04.2003**
(21) Anmeldenummer: 99118132.2
(22) Anmeldetag: 11.09.1999
(51) Int. Cl.: A01B 59/06

(54) **Unterlenkbaueinheit für eine Anbauvorrichtung eines Traktors**
Tractor hitch lower link assembly
Ensemble de bras inférieur pour dispositif d'accouplage de tracteur

(30) Priorität: 24.10.1998 DE 19849061
(43) Veröffentlichungstag der Anmeldung: 26.04.2000
(73) Patentinhaber: GKN Walterscheid GmbH, 53797 Lohmar (DE)
(72) Erfinder: Sayer, John, Dr., Bridgnorth, Shropshire WV16 4NB (GB)
(74) Vertreter: Harwardt, Günther, Dipl.-Ing.

(56) Entgegenhaltungen:
- EP-A- 0 608 750
- FR-A- 1 598 643
- US-A- 2 828 974
- US-A- 3 643 976

## Beschreibung

Die Erfindung betrifft eine Unterlenkerbaueinheit für eine Anbauvorrichtung eines Traktors.

In der EP 0 608 750 A1 ist eine Unterlenkerbaueinheit für eine Dreipunktanbauvorrichtung eines Traktors gemäß dem Oberbegriff von Anspruch 1 beschrieben. Dabei ist eine geschmiedete Strebe vorgesehen, die an einem Ende Anschlußmittel in Form eines Kugelauges zur Verbindung mit einem Schwenkbolzen am Heck des Traktors aufweist. Die Strebe ist im Querschnitt rechteckig und abgesetzt ausgebildet. Nahe zum freien Ende ist die Strebe U-förmig geschmiedet. Zur Bildung einer Kammer ist dieser Bereich durch einen Deckel abgeschlossen, der mit den Schenkeln des U-förmigen Abschnitts durch Schweißung verbunden ist. In den geschmiedeten Steg der Strebe ist eine Tasche eingeformt, in der eine Sperrklinke um eine Stiftverbindung schwenkbar angeordnet ist. Sie wird zu der aus der Kammer ausgeschwenkten Sperrstellung von einer Feder beaufschlagt. Im Abstand zu den Schwenkstiften sind zwei weitere Stifte angeordnet. Von diesen ist einer durch einen Durchbruch an einem der Schenkel des U-förmigen Abschnittes nach außen geführt und dort mit einem Knopf zum Handangriff versehen, um die von einer Feder beaufschlagte Sperrklinke in eine in die Tasche zurückgezogene Position bewegen zu können. Am Ende der Kammer der geschmiedeten Strebe ist eine Anschlagfläche vorgesehen. In die Kammer ist ein Einschubende mit einem im wesentlichen rechteckigen Querschnitt einsteckbar. Es weist eine durch eine Seitenfläche seines Schaftes vollständig hindurch verlaufende, im Querschnitt dreieckige Ausnehmung auf, die eine Stützfläche für die Riegelfläche der Sperrklinke besitzt und welche im wesentlichen quer zur Längsachse des Einschubendes verläuft. Die Stirnfläche des Einschubendes kommt zur Anlage gegen die Anschlagfläche der Kammer. An dem aus der Kammer herausragenden Ende ist das Einschubende mit einem Kugelauge versehen, welches zur Verbindung mit einem entsprechenden Anschlußbolzen des anzubauenden Gerätes dient. Nach Öffnen der Sperrklinke kann das Einschubende zumindest teilweise aus der Kammer herausgezogen werden, um das Kuppeln zu erleichtern. Stellausnehmungen, die in dem Schaft des Einschubendes ausgehend von dessen Schmalflächen vorgesehen sind, sollen eine Winkelverstellung gegenüber der am Traktor verbleibenden Strebe ermöglichen, um das Kuppeln zu erleichtern. Durch Zurücksetzen des Traktors kann das Einschubende in die Kammer eingefahren werden, bis die Sperrklinke nach Anlaufen der Stirnfläche des Schaftes des Einschubsendes gegen die Anschlagfläche der Kammer bis die Sperrklinke in die Ausnehmung in der Seitenfläche des Schaftes einfallen kann.

Die am Ende der U-förmigen Ausnehmung der Strebe vorhandene Anschlagfläche muß bearbeitet werden, um die Toleranzen einhalten zu können, die für eine ordnungsgemäße Verriegelung erforderlich sind. Es ist eine Anpassung an den Abstand zwischen der Stirnfläche des Schaftes des Einschubendes und der Sperrfläche der Ausnehmung und im Verhältnis zur Riegelfläche der Sperrklinke erforderlich. Enge Toleranzen können praktisch nicht eingehalten werden, da eine nachträgliche Bearbeitung, wenn dem U-förmigen Bereich der Deckel bereits zugeordnet ist, nicht mehr möglich ist. Die Ausbildung erfordert, daß die gesamte Strebe als Schmiedeteil gestaltet ist. Dies bedeutet hohe Kosten. Des weiteren ist für die Lagerung der Sperrklinke über Zapfen eine erhebliche Bearbeitung erforderlich. Schließlich ist für die Verwendung als linker oder rechter Unterlenker eine unterschiedliche Zuordnung des Betätigungsknopfes erforderlich. Darüber hinaus läßt die Kraftrichtung, mit der auf den Betätigungsknopf eingewirkt wird, keine Fernbetätigung, z.B. durch die Verwendung eines Seiles, das vom Traktorsitz aus betätigt werden kann, zu.

Der Erfindung liegt die Aufgabe zugrunde, eine Unterlenkerbaueinheit zu schaffen, die kostengünstig herstellbar ist und engere Toleranzen hinsichtlich der Verriegelung zwischen der Strebe und dem Anschlußende aufweist.

Diese Aufgabe wird erfindungsgemäß durch eine Unterlenkerbaueinheit mit einer aus einem Flachmaterial hergestellten Strebe, die zwei Schmalflächen, zwei Seitenflächen, ein erstes Ende, das mit Mitteln zur schwenkbeweglichen Anbringung am Traktor versehen ist und ein zweites Ende aufweist, mit einem Anschlußende, das Mittel zur Verbindung mit einem anzubauenden Gerät aufweist und das am zweiten Ende durch Riegelmittel lösbar befestigt ist und im gelösten Zustand gegenüber dem zweiten Ende der Strebe bewegbar ist und eine Schwenkbewegung im ausgezogenen Zustand erlaubt, wobei die Riegelmittel eine Ausnehmung in einer Seitenfläche der Strebe zum zweiten Ende hin mit einer Sperrfläche ,eine dem Anschlußende zugeordnete Sperrklinke, die zum Einrasten in die Ausnehmung in einer Tasche des Anschlußendes schwenkbeweglich gehalten ist eine mit der Sperrfläche zusamenwirkende Riegelfläche , eine Feder, welche die Sperrklinke zur Einnahme der Einraststellung beaufschlagt, und eine Betätigung, mittels der die Sperrklinke außer Eingriff zur Ausnehmung verlagerbar ist, aufweisen, wobei ferner die Ausnehmung kegelstumpfförmig gestaltet ist, und die um einen die Längsachse der Ausnehmung rechtwinklig mit Abstand kreuzende Schwenkachse schwenkbare Sperrklinke eine an die Mantelfläche der Ausnehmung, die als Sperrfläche dient, angepaßte Riegelfläche aufweist, das Anschlußende aus zwei Teilen aufgebaut ist, die unlösbar miteinander verbunden sind und zusammen eine einseitig offene Kammer bilden, welche das zweite Ende der Strebe aufnimmt, und von denen das erste Teile einen Grundkörper darstellt, der die Tasche zur Aufnahme der Sperrklinke und die Mittel zur Verbindung mit einem anzubauenden Gerät umfaßt, und das zweite Teil eine Abdeckung darstellt, welche eine Anschlagfläche besitzt, die mit einer Endfläche am zweiten Ende der Strebe zusammenwirkt, gelöst.

Von Vorteil bei dieser Ausbildung ist, daß für die Strebe selbst kein Schmiedeteil erforderlich ist. Es kann ein relativ preiswertes Profilmaterial als Ausgangsbasis gewählt werden. Ferner können relativ enge Toleranzen eingehalten werden, ohne daß es einer spanenden Bearbeitung bedarf, da die Abdeckung die Anschlagfläche umfaßt und deren Lage zum Toleranzausgleich bei der Verbindung der Abdeckung mit dem Grundkörper justiert werden kann. Da im Bereich großer Entfernung von der Anlenkung der Strebe am Traktor keine Schweißarbeiten an der Strebe vorgenommen zu werden brauchen, ergeben sich auch keine gefährdeten Abschnitte. Bei dem Anschlußende und insbesondere dem Grundkörper desselben, handelt es sich um ein relativ kleines und im Gewicht leichteres Bauteil im Verhältnis zu der Strebe, so daß der Grundkörper auch kostengünstig als Schmiedeteil herstellbar ist. Dabei kann die Ausnehmung für die Aufnahme einer Lagerkugel mit angeschmiedet werden. Während der Grundkörper vorzugsweise geschmiedet ist, ist die Abdeckung vorzugsweise aus Blech warm geformt und mit dem Grundkörper verschweißt. Um eine genügend große Schwenkbewegung des Anschlußendes im ausgezogenen Zustand erzielen zu können, sind von den Schmalflächen der Strebe ausgehende Stellausnehmungen vorhanden, die im Abstand von der Endfläche der Strebe beginnen und sich über eine bestimmte Länge erstrecken. Die Ausbildung der Ausnehmung in der Seitenfläche der Strebe und die an diese angepaßte Riegelfläche der Sperrklinke erlauben eine günstige Zentrierung des Anschlußendes im Verhältnis zur Strebe und darüber hinaus ein sicheres Einfallen der Sperrklinke und eine günstige Lastverteilung. Des weiteren ist durch die Teilung des Anschlußendes eine einfache Anpassung an unterschiedlich in der Dicke bemessene Streben möglich. Nur die Abdeckung ist zu ändern. Das teure Schmiedeteil kann für alle Baugrößen gleich sein.

In Ausgestaltung der Erfindung ist vorgesehen, daß die Sperrklinke an ihrem der Riegelfläche entfernten Ende eine im Querschnitt durch einen Kreisbogen begrenzte Stützfläche aufweist, die sich an einer entsprechenden Lagerfläche in der Tasche schwenkbeweglich abstützt und daß die Feder als Blattfeder gestaltet ist und derart in der Tasche und an der Sperrklinke abgestützt ist, daß die Stützfläche in Kontakt zur Lagerfläche gehalten ist.

Hierdurch wird eine günstige Krafteinleitung von der Sperrklinke in den Grundkörper des Anschlußendes erzielt. Darüber hinaus entfällt in erheblichem Maße eine spanende Bearbeitung, da Bohrungen für Stifte zur schwenkbeweglichen Anordnung entfallen. Für die Abstützung steht eine relativ große Fläche zur Verfügung, so daß ein nur geringer Verschleiß gegeben ist. Um die Zentrierung des Anschlußendes gegenüber der Strebe beim Kuppeln zu erleichtern, sind zwischen der Endfläche der Strebe und den beiden Schmalflächen Schrägflächen vorgesehen. Diese vergrößern außerdem die Schwenkmöglichkeit des Anschlußendes gegenüber der Strebe, um eine Achse, die auf der Seitenfläche der Strebe senkrecht steht.

Um die Stellbewegung des Anschlußendes entlang der Längsachse zur Strebe zu begrenzen, ist ein die Kammer und eine Stelle die Ausnehmung durchquerender Anschlagsstift am Grundkörper und/oder der Abdeckung festgelegt.

Um das Einfallen der Sperrklinke zu erleichtern, ist zwischen dem Boden der Ausnehmung und der Mantelfläche derselben ein gerundeter Übergang vorhanden. Die zum Boden hin gerundete und ansonsten kegelstumpfförmige Ausnehmung läßt sich in einfacher Weise in der Seitenfläche der Strebe herstellen und spanend auf Endmaß bearbeiten. Die Riegelfläche der Sperrklinke ist daran angepaßt. Um die Schwenkbeweglichkeit des Anschlußendes gegenüber der Strebe zu ermöglichen, ist es alternativ möglich, die Stellausnehmungen nicht in der Strebe vorzusehen, sondern im Grundkörper und/oder der Abdeckung zu den Schmalflächen hin Stelltaschen anzuordnen. Um die Schwenkbeweglichkeit zu vergrößern, kann zusätzlich vorgesehen sein, die Höhe der Strebe zu deren Endfläche hin mit einer Stufe zu reduzieren.

Bevorzugte Ausführungsbeispiele der Erfindung sind in der Zeichnung schematisch dargestellt und anhand derselben näher beschrieben.

Es zeigt
- Figur 1: eine Seitenansicht einer ersten erfindungsgemäßen Unterlenkerbaueinheit,
- Figur 2: eine Draufsicht zu Figur 1, teilweise geschnitten,
- Figur 3: das Anschlußende von Figur 1 im vergrößerten Maßstab,
- Figur 4: den geschnittenen Bereich der Figur 2 im vergrößerten Maßstab,
- Figur 5: schematisch die Bewegungsmöglichkeit des Anschlußendes gegenüber der Strebe,
- Figur 6: das Anschlußende im Verhältnis zur Strebe in einer ausgezogenen Position, welche der von Figur 5 entspricht, jedoch geschnitten dargestellt ist, und
- Figur 7: einen Schnitt durch eine alternative Ausbildung, um einen Freiraum zu schaffen, der die vertikale Bewegung des Anschlußendes gegenüber der Strebe ermöglicht.

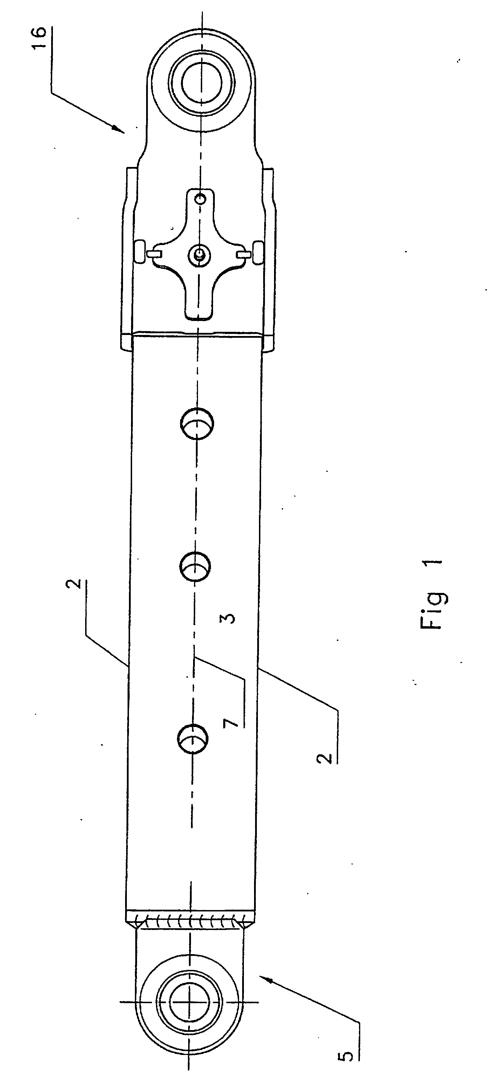

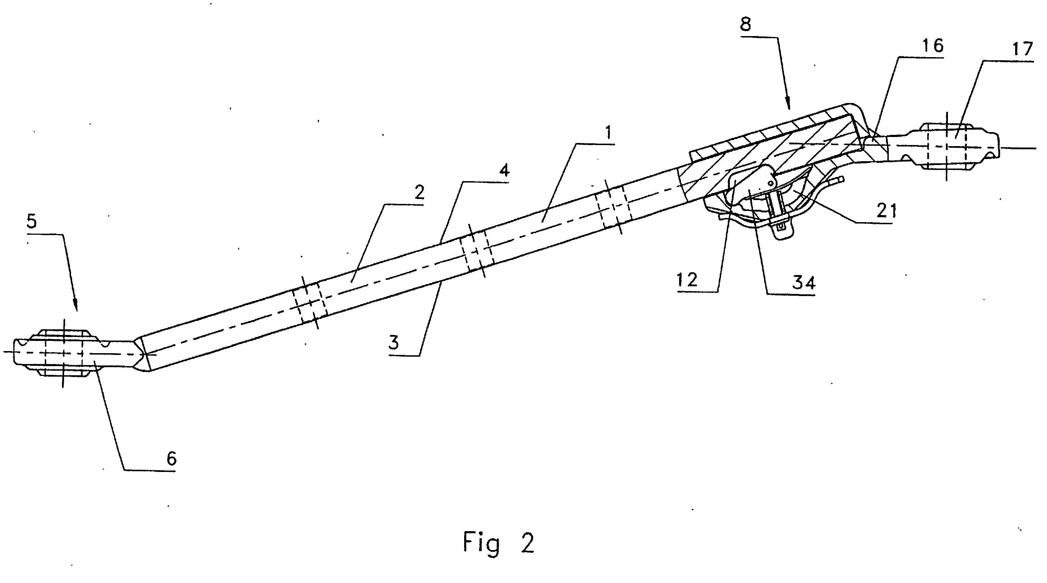

Nachfolgend wird zunächst die erste Ausführungsform anhand der Figuren 1 bis 6 näher erläutert. Die Unterlenkerbaueinheit umfaßt eine Strebe 1, die aus einem Flachmaterial hergestellt ist und zwei Schmalflächen 2 und die beiden Seitenflächen 3, 4 besitzt. An dem ersten Ende 5 der Strebe 1 befindet sich ein daran angeschweißtes Kugelgelenkauge 6. Dieses dient zur schwenkbeweglichen Festlegung am Traktor oder einer selbstfahrenden Arbeitsmaschine. Die Strebe 1 weist die Längsachse 7 auf und ihr zweites, dem ersten Ende 5 entferntes Ende ist mit 8 bezeichnet. Ausgehend von den Schmalflächen 2 sind zum zweiten Ende 8 hin Stellausnehmungen 9 eingearbeitet, die sich in einem Abstand von der Endfläche 10 am zweiten Ende 8 befinden. Im Bereich zwischen dem Ende der Stellausnehmungen 9 und der Endfläche 10 befinden sich gegenüber den Schmalflächen 2 abgesetzte Schmalflächen 2a, d.h., daß die Höhe der Strebe 1 im Bereich zwischen den beiden Schmalflächen 2 größer ist als zwischen den beiden Schmalflächen 2a. Von der Endfläche 10 gehen zwei Schrägflächen 11 aus, die in den abgesetzten Schmalflächen 2a enden und zur Zentrierung eines Anschlußendes 16 dienen. In die Seitenfläche 3 der Strebe ist im Abstand von der Endfläche 10 eine Ausnehmung 12 eingearbeitet. In der Draufsicht ist die Ausnehmung 12 kreisförmig. Sie weist eine Längsachse 12a auf. Es handelt sich um eine kegelstumpfförmige Vertiefung, deren Mantelfläche die Sperrfläche 13 bildet, geneigt zur Längsachse 12a verläuft und mit einer Rundung 14 im Boden 15 endet. Das auf das zweite Ende 8 der Strebe 1 aufgesteckte Anschlußende 16 umfaßt ebenfalls ein Kugelgelenkauge 17 zur Verbindung mit einem anzuhängenden bzw. von den beiden parallel am Traktor zueinander angeordneten Unterlenkern zu tragendes Gerät. Das Anschlußende 16 besteht aus zwei Teilen, nämlich aus einem Grundkörper 18 und einer Abdeckung 19. Der Grundkörper 18 ist als Schmiedeteil gestaltet. Von einer Planfläche 20 des Schmiedeteils geht eine Tasche 21 aus, die durch eine nach außen gerichtete Wölbung begrenzt ist. Die Tasche besitzt eine Lagerfläche 22, die von einem Teil einer Mantelfläche eines Zylinders mit der Achse 33 begrenzt ist. Sie dient als Abstützung für eine Sperrklinke 34, was noch nachfolgend näher beschrieben wird. Des weiteren ist der Grundkörper 18 mit einer Lagerausnehmung 23 versehen, die zur Aufnahme einer Lagerkugel 24 dient. Die Lagerkugel 24 besitzt eine Durchgangsbohrung 25 und dient zum Anschluß an einen Aufnahmebolzen des anzuhängenden Gerätes.

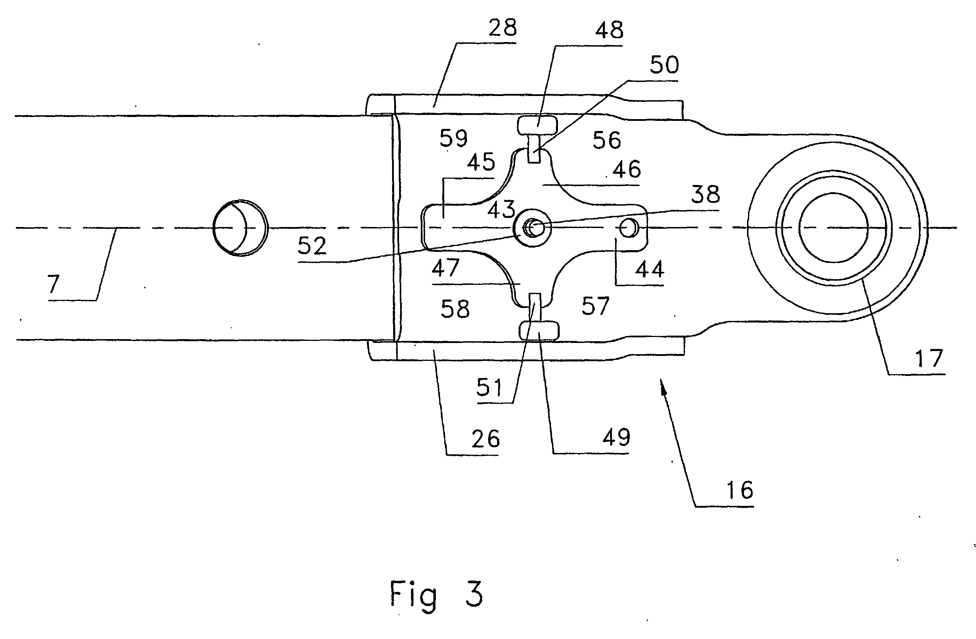

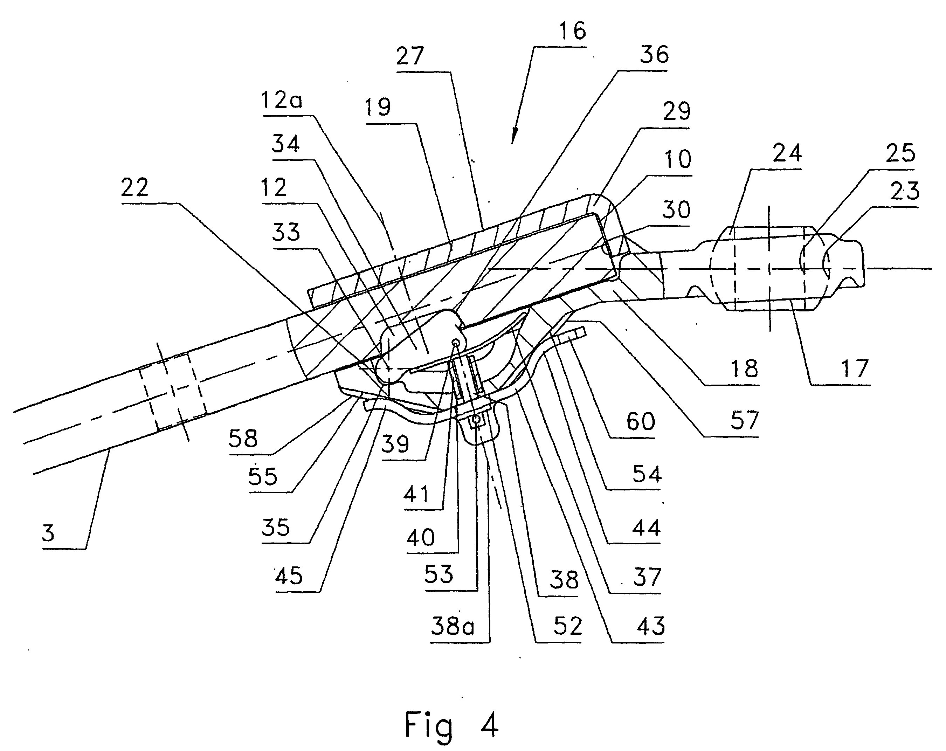

Die Abdeckung 19 ist im Querschnitt U-förmig gestaltet und weist die beiden durch den Steg 27 miteinander verbundenen kurzen Schenkel 26, 28 auf, die den Grundkörper 18 zwischen sich aufnehmen und mit diesem verschweißt sind. Zum Kugelgelenkauge 17 hin besitzt die Abdeckung 19 eine Stirnwand 29, die innen die Anschlagfläche 30 bildet. Im Übergang zwischen der Innenfläche des Steges 27 und der Anschlagfläche 30 ist eine Vertiefung 31 vorhanden. Die Planfläche 20 des Grundkörpers 18 und die Innenflächen der beiden Schenkel 26, 28 und des Steges 27 sowie die Anschlagfläche 30 der Stirnwand 29 der Abdeckung 19 umschließen eine Kammer 32, in welcher das zweite Ende 8 der Strebe aufgenommen ist. In den Figuren 3 und 4 ist der eingeschobene Zustand dargestellt, daß heißt das Anschlußende 16 ist auf das zweite Ende 8 der Strebe 1 voll aufgesteckt, so daß sich die Endfläche 10 der Strebe 1 in Anlage zur Anschlagfläche 30 befindet. Die Vertiefung 31 sorgt dafür, das die Endfläche 10 mit ihrer ganzen Fläche an der Anlagefläche 30 anliegt, d.h. sich eindeutige Abstützverhältnisse ergeben. Darüber hinaus sind die beiden durch eine Sperrklinke 34 miteinander verriegelt.

Die Sperrklinke 34 besitzt eine Stützfläche 35, die an die Mantelfläche (= Sperrfläche 17) angepaßt ist und der Lagerfläche 22 entspricht, so daß die Sperrklinke 34 um die Schwenkachse 33, die die Zylinderachse bildet, schwenkbar ist. Es ist erkennbar, daß die Schwenkachse 33 zur Längsachse 12a der Ausnehmung 12 mit Abstand angeordnet ist und diese rechtwinklig kreuzt.

An dem der Stützfläche 35 abgewandten Ende besitzt die Sperrklinke 34 eine Riegelfläche 36, welche der Form der die Sperrfläche bildenden Mantelfläche 13 und der Rundung 14 der Ausnehmung 12 angepaßt ist. Durch die Formgebung wird das Einschwenken in die Ausnehmung 12 erleichtert. In Figur 4 ist die verrastete Position dargestellt, d.h. die Sperrklinke 34 befindet sich mit ihrer Riegelfläche 36 in Eingriff zur Ausnehmung 12 und hält das Anschlußende 16 auf dem zweiten Ende 8 der Strebe 1 fest, so daß von der Strebe 1 Zugkräfte auf das Kugelgelenkauge 17 ausgeübt werden können.

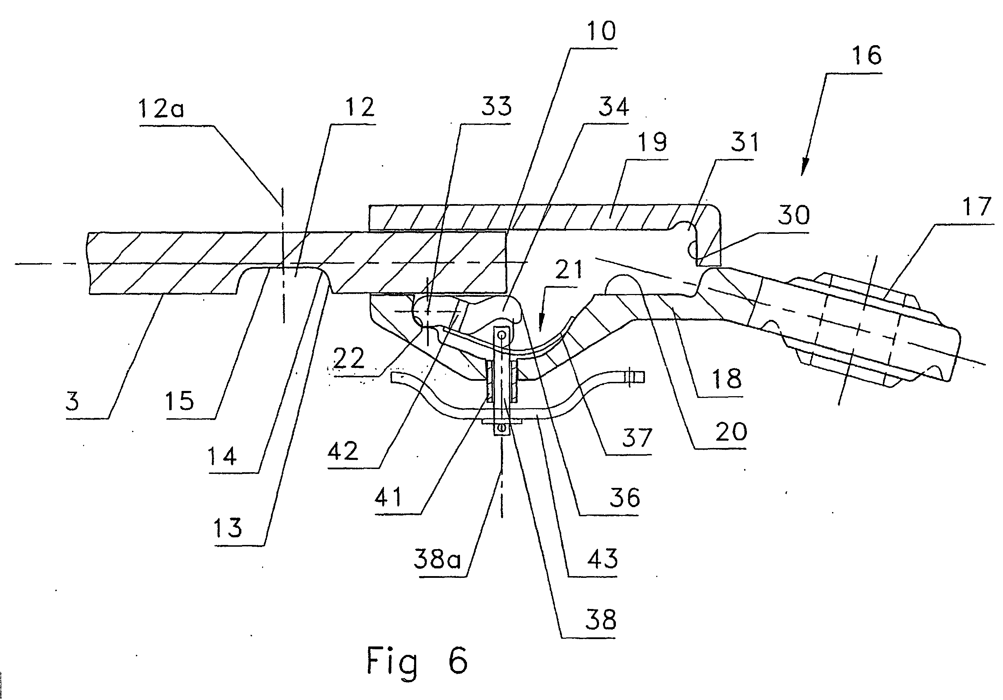

Die Abdeckung 19 ist als Blechformteil oder Gußteil gestaltet, das genauer gefertigt werden kann, als der durch Schmieden hergestellte Grundkörper 1. Durch die Zuordnung der Anschlagfläche 30 zur Abdeckung 19 ist es daher möglich, bei der Herstellung der Verbindung zwischen dem Grundkörper 18 und der Abdeckung 19 durch Verschiebung der Abdeckung 19 zum Grundkörper 18 evtl. Abweichungen auszugleichen. Somit können die exakten Abstandsmaße, die die Ausnehmung 12 zur Endfläche 10 aufweist, da letztere spanend bearbeitet ist, auf das Anschlußende 16 übertragen werden, um eine weitgehend spielfreie Verriegelung durch die Sperrklinke 34 zu erzielen. Die Sperrklinke 34 weist einen gabelförmig gestalteten Abschnitt auf. Zwischen dessen beiden Gabelarmen ist die Zugstange 38 aufgenommen und mit der Sperrklinke 34 durch einen quer verlaufenden Stift 39 schwenkbar verbunden. Die Zugstange 38 ist zylindrisch gestaltet und durch eine Bohrung 40 in der Wandung des Grundkörpers 18 im Bereich der Tasche 21, in welcher die Sperrklinke 34 aufgenommen ist, nach außen herausgeführt. Koaxial um die Zugstange 38 herum, ist eine Anschlagbuchse 41 angeordnet, die begrenzt verschiebbar ist und im verriegelten Zustand der Sperrklinke 34 nach innen in die Tasche 21 auf die Sperrklinke 34 vorragt. Sie begrenzt deren Schwenkmöglichkeit. Ein unbeabsichtigtes Verschwenken der Sperrklinke 34 in die entriegelte Stellung, bei der sich die Riegelfläche 36 außer Eingriff zur Ausnehmung 12 befindet, wird verhindert. Außen ist an die Zugstange 38 ein Betätigungshebel 43 angeschlossen. Dieser ist mit einer Bohrung um die Drehachse 38a drehbar auf der Zugstange 38 gehalten. Die Drehachse 38a wird durch die Längsachse der Zugstange 38 dargestellt. Der Betätigungshebel 43 ist ferner auf der Zugstange 38 durch einen Stift 53 zumindest in einer Richtung gegen axiale Verlagerung gesichert. Zwischen dem Stift 53 und der Außenfläche des Betätigungshebels 42 ist eine Federscheibe 52 angeordnet. Die Federscheibe 52 dient dazu, auch im verriegelten Zustand Spiel zu unterdrücken, d.h. ein Rattern des Betätigungshebels 43 zu vermeiden. Die Anschlagbuchse 41 stützt sich mit ihrem äußeren Ende gegen den Betätigungshebel 43 ab. Der Betätigungshebel 43 besitzt vier Arme. Es sind zwei Betätigungsarme 44, 45 vorhanden, von denen einer, nämlich der Betätigungsarm 44 mit einer Bohrung 60 zum Anschluß eines Zugmittels versehen ist. Des weiteren sind zwei Sicherungsarme 46, 47 vorgesehen, die rechtwinklig zu den beiden Betätigungsarmen 44, 45 angeordnet sind, so daß sich eine Art Kreuzform ergibt. Darüber hinaus sind die beiden Betätigungsarme 44 zweifach gekröpft, so daß sie in Richtung zur Außenfläche des Grundkörpers 18 im Bereich der Tasche 21, welche gewölbt ist, vorstehen. Die Außenfläche des Grundkörpers 18 ist im Bereich der Tasche 21 mit einer Stellkontur versehen. Für den Verriegelungszustand, so wie in den beiden Figuren 3 und 4 dargestellt, befindet sich im Bereich der beiden Betätigungsarme 44, 45, die dann im wesentlichen mit der Längsachse 7 ausgerichtet sind, rechts und links der Zugstange 38 jeweils eine Vertiefung mit der Basis 54, 55. Ausgehend von der Basis 54, 55 sind ansteigende Stellflächen vorhanden, und zwar nach oben vom Betätigungsarm 44 die Stellfläche 56 und nach oben vom Betätigungsarm 45 die Stellfläche 59. Unterhalb der beiden Betätigungsarme 44, 45 sind die beiden ansteigenden Stellflächen 57, 58 vorhanden. Da die beiden Betätigungsarme 44, 45 zweifach gekröpft sind, liegen sie im Bereich der zweiten Kröpfung an der Stellkontur der Außenseite des Grundkörpers 18 an. Bei Verschwenkung des Betätigungshebels 43 um die Drehachse 38a der Zugstange 38 im linksschwenkenden Sinne durch Einwirken auf ein Zugmittel, das beispielsweise über die Bohrung 60 an den Betätigungsarm 44 angelenkt ist, wandert der Betätigungsarm 44 von der Basis 54 an der ansteigenden Stellfläche 56 aufwärts und, um eine symmetrische Belastung zu erzielen, der zweite Betätigungsarm 45 an der. ansteigenden Stellfläche 58 entlang von der Basis 55 weg. Dies bedeutet, daß eine Zugkraft auf die Zugstange 38 ausgeübt wird und dabei die Sperrklinke 34 im rechtsschwenkenden Sinne um die Schwenkachse 26 mit ihrer Riegelfläche 36 aus der Ausnehmung 12 herausgeschwenkt wird, und zwar in eine Position, wie sie in Figur 6 dargestellt ist. Dabei wandert auch die Anschlagbuchse 41 mit nach außen. Die Sperrklinke 34 ist zusätzlich über eine relativ starke Blattfeder 37 in Richtung zu ihrer Sperrstellung hin, d.h. im linksschwenkenden Sinne beaufschlagt. Die Feder 37 stützt sich mit einem Ende an der Innenkontur der Tasche 21 ab. Das andere Ende liegt auf der Sperrklinke 34 auf und ist mit dieser durch einen in eine Bohrung der Sperrklinke 34 eingesetzten Haltestift 42 verbunden. Des weiteren weist die Feder 37 einen Schlitz auf, durch den die Zugstange 38 hindurchgeführt ist. Um die Sperrklinke 34 in der verriegelten Position zu sichern, sind außen an dem Grundkörper 18 im Bereich der Tasche 21 Nocken 48, 49 angebracht, die Vorsprünge aufweisen, die beispielsweise in Form von in Richtung auf die Zugstange 38 vorstehenden Sicherungsstiften 50, 51 dargestellt sind. Im verriegelten Zustand liegen die Sicherungsarme 46, 47 unter den Sicherungsstiften 50, 51. In dieser Position ist die Anschlagbuchse 41 in ihrer nach innen verlagerten Stellung dadurch gehalten, daß sie sich gegen den verriegelten Betätigungshebel 43 abstützt sowie nicht ausweichen kann, und die Sperrklinke 34 befindet sich in der Ausnehmung 12. Die Sperrklinke 34 würde beim Ausschwenken außer Eingriff zur Ausnehmung 12 gegen die Anschlagbuchse 41 anschlagen. Bei Einwirkung einer Zugkraft auf den Betätigungshebel 43 erfolgt keine Verlagerung der Zugstange 38 und damit der Sperrklinke 34. Darüber hinaus wird hierdurch auch die Sperrklinke 34 verriegelt. Dies bedeutet, daß auch bei Vibrationen keine Verschwenkung um die Schwenkachse 26 erfolgen kann, da die Sperrklinke 34 mit ihrer Außenfläche zur Anlage gegen die Stirnfläche der Anschlagbuchse 40 kommt. Diese kann nicht nach außen ausweichen.

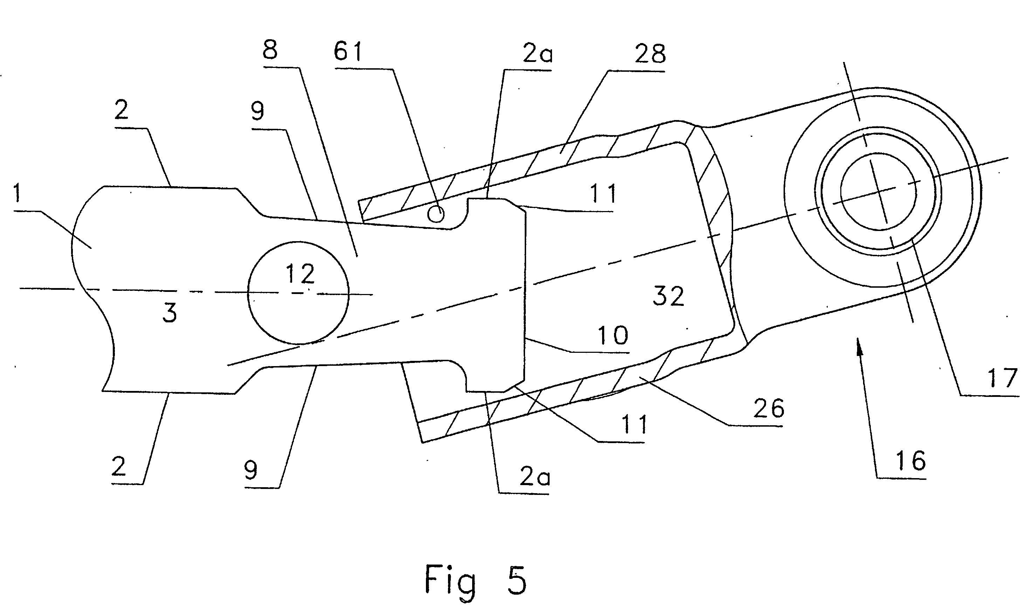

Nach Lösen der Verriegelung, d.h. nach Überführen der Sperrklinke 34 in eine Position, wie sie beispielsweise in Figur 6 dargestellt ist, kann das Anschlußende 16 von dem zweiten Ende 8 weg nach vorne gezogen werden. In Figur 6 ist nicht die wahre Position des Betätigungshebels 43 dargestellt. Es ist vielmehr, um die Übersichtlichkeit zu erhalten, eine Stellung gezeigt, die diesen vollkommen nach außen verlagert zeigt, d.h. außer Kontakt zur Außenfläche des Grundkörpers 18 ist. In Figur 5 ist darüber hinaus die Verschwenkung des Anschlußendes 16 nach oben im Verhältnis zur Längsachse 7 der Strebe 1 gezeigt. Es ist erkennbar, daß im Bereich der Kammer 32 die Innenflächen der Schenkel 26, 28 sich einander annähern und in einen konstanten Verlauf übergehen und dort die beiden abgesetzten Sperrflächen 2a geführt sind. Die Schrägflächen 11 helfen zur Zentrierung auf diesen Bereich. Der Auszugsweg des Anschlußendes 16 gegenüber dem zweiten Ende 8 ist durch den die Kammer 32 durchquerenden Anschlagstift 61 begrenzt. Der Anschlagstift 61 liegt im Bereich einer Stellausnehmung 9. Die Stellausnehmungen 9 erlauben eine Verschwenkung des Anschlußendes 16, wie in Figur 4 dargestellt. Darüber hinaus sind in horizontaler Richtung auch noch geringe Verstellbewegungen möglich. Die Verschwenkmöglichkeit erleichtert das Ankoppeln eines Gerätes bei einer Höhenabweichung der Strebe 1 zum Anschlußbolzen des anzukuppelnden Gerätes. Nach dem Ankuppeln knn durch Zurücksetzen des Traktors die Strebe 1 mit ihrem zweiten Ende 8 in die Kammer 32 eingefahren werden, bis die Stirnfläche 10 gegen die Anschlagfläche 30 der Abdeckung 19 zur Anlage kommt und die Sperrklinke 34 unter der Kraft der Feder 37 in die Ausnehmung 12 einrastet. Der für das Einfahren erforderliche Widerstand wird durch das Gewicht des anzukuppelnden Gerätes dargestellt.

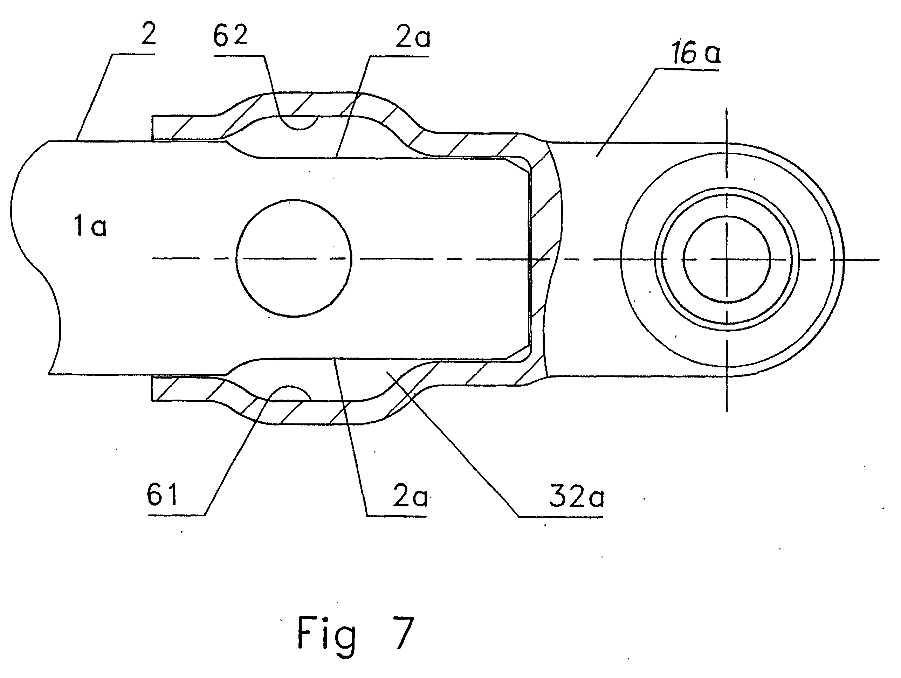

Figur 7 zeigt eine Variante für die Ausbildung des zweiten Endes der Strebe 1a und des Anschlußendes 16a. Zur Erzielung der vertikalen Bewegungsfreiheit ist über einen erheblichen Teil der Länge des zweiten Endes der Strebe 1a ein Absatz geformt. An einem ersten Bereich, in dem die beiden Schmalflächen 2 mit einem größeren Abstand parallel zueinander verlaufend in der Kammer 32a des Anschlußendes 16a an den Schenkeln der Abdeckung geführt sind, schließt ein Bereich an, in dem die beiden Schmalflächen 2a abgesetzt sind. In diesem Bereich sind die Schenkel teilweise zu Stelltaschen 62 ausgeformt und anschließend zu einem Bereich geformt, in dem die abgesetzten Schmalflächen 2a geführt sind. Die Stelltaschen 62 sorgen für die nötige Bewegungsfreiheit des Anschlußendes 16a gegenüber der Strebe 1a im ausgezogenen Zustand.

Bezugszeichenliste
- 1: Strebe
- 2: Schmalfläche
- 2a: abgesetzter Teil der Schmalflächen
- 3: Seitenfläche
- 4: Seitenfläche
- 5: erstes Ende
- 6: Kugelgelenkauge
- 7: Längsachse
- 8: zweites Ende
- 9: Stellausnehmung
- 10: Endfläche
- 11: Schrägfläche
- 12: Ausnehmung
- 12a: Längsachse der Ausnehmung
- 13: Sperrfläche/Xantelfläche
- 14: Rundung
- 15: Boden
- 16, 16a: Anschlußende
- 17: Kugelgelenkauge
- 18, 18a: Grundkörper
- 19, 19a: Abdeckung
- 20: Planfläche
- 21: Tasche
- 22: Lagerfläche
- 23: Lagerausnehmung
- 24: Lagerkugel
- 25: Durchgangsbohrung
- 26: Schenkel
- 27: Steg
- 28: Schenkel
- 29: Stirnwand
- 30: Anschlagfläche
- 31: Vertiefungen
- 32, 32a: Kammer
- 33: Schwenkachse
- 34: Sperrklinke
- 35: Stützfläche
- 36: Riegelfläche
- 37: Feder
- 38: Zugstange
- 38a: Drehachse
- 39: Stift
- 40: Bohrung
- 41: Anschlagbuchse
- 42: Haltestift für Feder
- 43: Betätigungshebel
- 44: Betätigungsarm
- 45: Betätigungsarm
- 46: Sicherungsarm
- 47: Sicherungarm
- 48: Nocken
- 49: Nocken
- 50: Sicherungsstift
- 51: Sicherungsstift
- 52: Federscheibe
- 53: Stift
- 54: Basis
- 55: Basis
- 56, 57, 58, 59: Stellfläche
- 60: Bohrung
- 61: Anschlagstift
- 62: Stelltasche

## Patentansprüche

1. Unterlenkerbaueinheit für eine Anbauvorrichtung eines Traktors,
mit einer aus einem Flachmaterial hergestellten Strebe (1), die zwei Schmalflächen (2), zwei Seitenflächen (3, 4), ein erstes Ende (5), das mit Mitteln (6) zur schwenkbeweglichen Anbringung am Traktor versehen ist, und ein zweites Ende (8) aufweist,
mit einem Anschlußende (16, 16a), das Mittel (17) zur Verbindung mit einem anzubauenden Gerät aufweist und das am zweiten Ende (8) durch Riegelmittel lösbar befestigt ist und im gelösten Zustand gegenüber dem zweiten Ende (8) der Strebe (1) bewegbar ist und eine Schwenkbewegung im ausgezogenen Zustand erlaubt, **dadurch gekennzeichnet daß**
die Riegelmittel eine Ausnehmung (12) in einer Seitenfläche (3) der Strebe (1) zum zweiten Ende (8) hin mit einer Sperrfläche (13) , eine dem Anschlußende (16) zugeordnete Sperrklinke (34), die zum Einrasten in die Ausnehmung (12) in einer Tasche (21) des Anschlußendes (16) schwenkbeweglich gehalten ist, eine mit der Sperrfläche (13) zusammenwirkende Riegelfläche (36) , eine Feder (37), welche die Sperrklinke (34) zur Einnahme der Einraststellung beaufschlagt und eine Betätigung (38, 43), mittels der die Sperrklinke (34) außer Eingriff zur Ausnehmung (12) verlagerbar ist, aufweisen,
daß ferner die Ausnehmung (12) kegelstumpfförmig gestaltet ist und die um eine die Längsachse (12a) der Ausnehmung (12) rechtwinklig mit Abstand kreuzende Schwenkachse (33) schwenkbare Sperrklinke (34) eine an die Mantelfläche der Ausnehmung (12), die als Sperrfläche (13) dient, angepaßte Riegelfläche (36) aufweist, daß das Anschlußende (16, 16a) aus zwei Teilen (18, 19) aufgebaut ist, die unlösbar miteinander verbunden sind und zusammen eine einseitig offene Kammer (32) bilden, welche das zweite Ende (8) der Strebe (1) aufnimmt, und von denen das erste Teil einen Grundkörper (18) darstellt, der die Tasche (21) zur Aufnahme der Sperrklinke (34) und die Mittel (17) zur Verbindung mit einem anzubauenden Gerät umfaßt, und das zweite Teil eine Abdekkung (19) darstellt, welche eine Anschlagfläche (30) besitzt, die mit einer Endfläche (10) am zweiten Ende (8) der Strebe (1) zusammenwirkt.

2. Unterlenkerbaueinheit nach Anspruch 1,
**dadurch gekennzeichnet,**
**daß** der Grundkörper (18) geschmiedet ist und eine Lagerausnehmung (23) aufweist, in der allseitig schwenkbar eine Lagerkugel (24), die eine Durchgangsbohrung (25) zur Verbindung besitzt, aufgenommen ist.

3. Unterlenkerbaueinheit nach einem der Ansprüche 1 oder 2,
**dadurch gekennzeichnet,**
**daß** die Abdeckung (19) aus Blech geformt und im Querschnitt U-förmig ist und eine Stirnwand (29) aufweist, die die Anschlagfläche (30) besitzt, und daß die Abdeckung (19) mit dem Grundkörper (18) verschweißt ist.

4. Unterlenkerbaueinheit nach Anspruch 1,
**dadurch gekennzeichnet,**
**daß** von der Schmalfläche (2) der Strebe (1) ausgehende Stellausnehmungen (9) vorhanden sind, die im Abstand von der Endfläche (10) der Strebe (1) beginnen.

5. Unterlenkerbaueinheit nach Anspruch 1,
**dadurch gekennzeichnet,**
**daß** die Sperrklinke (34) an ihrem der Riegelfläche (36) entfernten Ende eine im Querschnitt durch einen Kreisbogen begrenzte Stützfläche (35) aufweist, die sich an einer entsprechenden Lagerfläche (32) in der Tasche (21) schwenkbeweglich abstützt, und daß die Feder (37) als Blattfeder gestaltet ist und derart in der Tasche (21) und an der Sperrklinke (34) abgestützt ist, daß die Stützfläche (35) in Kontakt zur Lagerfläche (22) gehalten ist.

6. Unterlenkerbaueinheit nach Anspruch 1,
**dadurch gekennzeichnet,**
**daß** zwischen der Endfläche (10) der Strebe (1) und den Schmalflächen (2, 2a) Schrägflächen (11) angeordnet sind.

7. Unterlenkerbaueinheit nach einem der Ansprüche 1 bis 6,
**dadurch gekennzeichnet,**
**daß** ein die Kammer (32) und eine Stellausnehmung (9) durchquerender Anschlagstift (61) am Grundkörper (18) und/oder der Abdeckung (19) festgelegt ist.

8. Unterlenkerbaueinheit nach Anspruch 1,
**dadurch gekennzeichnet,**
**daß** zwischen dem Boden (15) der Ausnehmung (12) und der die Sperrfläche (13) bildenden Mantelfläche eine Rundung (14) vorhanden ist.

9. Unterlenkerbaueinheit nach Anspruch 1,
**dadurch gekennzeichnet,**
**daß** der Grundkörper (16a) und/oder die Abdeckung (19a) zu den Schmalflächen (2, 2a) hin Stelltaschen (62) aufweist.

10. Unterlenkerbaueinheit nach einem der Ansprüche 1 bis 9,
**dadurch gekennzeichnet,**
**daß** die Höhe der Strebe (1, 1a) zur Endfläche (10) mit einer Stufe abnimmt.

## Claims

1. A lower steering arm assembly for an attaching device of a tractor,
having a strut (1) produced from a flat material and comprising two narrow faces (2), two side faces (3, 4), a first end (5) provided with means (6) to permit pivotable attachment to the tractor, and a second end (8);
having an attaching end (16, 16a) which comprises means (17) permitting connection with an implement to be attached and which is removably secured to the second end (8) by locking means, and which, in the released condition, is movable relative to the second end (8) of the strut (1) and allows a pivot movement in the estracted condition,
**characterised in that**
the locking means comprise a recess (12) in a side face (3) of the strut (1) towards the second end (8), said recess (12) having a blocking face (13); a blocking pawl (34) which is associated with the attaching end (16) and, which, for the purpose of engaging the recess (12), is pivotably held in a pocket (21) of the attaching end (16); a locking face (36) cooperating with the blocking face (13); a spring (37) which loads the blocking pawl (34) to assume the engaged position; and actuating means (38, 43) by means of which the blocking pawl (34) is disengageable from the recess (12);
that, furthermore, the recess (12) is truncated-cone-shaped and that the blocking pawl (34) pivotable around a pivot axis (33) intersecting the longitudinal axis (12a) at a distance at a right angle comprises a locking face (36) adapted to the inner envelope face of the recess (12), which inner envelope face serves as the blocking face (13), that the attaching end (16, 16a) consists of two parts (18, 19) which are non-removably connected to one another and, together, form a chamber (32) which is open on one side and which receives the second end (8) of the strut (1) and of which a first part constitutes the base member (18) which comprises the pocket (21) for receiving the blocking pawl (34) and the means (17) for being connected to an implement to be attached, and that the second part constitutes a cover (19) which is provided with a stop face (30) co-operating with an end face (10) at the second end (8) of the strut (1).

2. A lower steering arm assembly according to claim 1,
**characterised in that**
the base member (18) is forged and comprises a bearing recess (23) in which there is accommodated a bearing ball (24) which is pivotable in all directions and is provided with a through-bore (25) for connecting purposes.

3. A lower steering arm assembly according to any one of claims 1 or 2,
**characterised in that**
the cover (19) is formed of plate metal and is U-shaped in cross section and comprises an end wall (29) comprising the stop face (30) and that the cover (19) is welded to the base member (19).

4. A lower steering arm assembly according to claim 1,
**characterised in that**
there are provided setting recesses (9) which start from the narrow face (2) of the strut (1) and begin at a distance from the end face (10) of the strut (1).

5. A lower steering arm assembly according to claim 1,
**characterised in that**
at its end removed from the locking face (36), the blocking pawl (34) comprises a supporting face (35) which, in its cross-section, is delimited by a circular arch and which is pivotably supported on a corresponding bearing face (32) in the pocket (21), and that the spring (37) is a leaf spring which is supported in the pocket (21) and on the blocking pawl (34) in such a way that the supporting face (35) is held in contact with the bearing face (22).

6. A lower steering arm assembly according to claim 1,
**characterised in that**
inclined faces (11) are arranged between the end face (10) of the strut (1) and the narrow faces (2, 2a).

7. A lower steering arm assembly according to any one of claims 1 to 6,
**characterised in that**
a stop pin (61) crossing the chamber (32) and a setting recess (9) is secured to the base member (18) and/or to the cover (19).

8. A lower steering arm assembly according to claim 1,
**characterised in that**
between the bottom (15) of the recess (12) and the inner envelope face forming the blocking face (13), there is provided a curvature (14).

9. A lower steering arm assembly according to claim 1,
**characterised in that**,
towards the narrow faces (2, 2a), the base member (16a) and/or the cover (19a) comprise(s) setting pockets (62).

10. A lower steering arm assembly according to any one of claims 1 to 9,
**characterised in that**,
towards the end face (10) the height of the strut (1, 1a) is reduced by providing a step.

## Revendications

1. Ensemble de bras inférieur pour dispositif d'attelage d'un tracteur, comportant une entretoise (1) réalisée en matériau plat qui comprend deux petites surfaces (2), deux surfaces latérales (3, 4), une première extrémité (5) pourvue de moyens (6) pour le montage avec faculté de pivotement sur le tracteur, et une deuxième extrémité (8), et comportant une extrémité de raccordement (16, 16a) qui comprend des moyens (17) pour la liaison avec un appareil à atteler et qui est fixée de façon détachable à la deuxième extrémité (8) par des moyens de verrouillage et est mobile par rapport à la deuxième extrémité (8) de l'entretoise (1) dans l'état détaché et permet un mouvement de pivotement dans l'état déployé, **caractérisé en ce que** les moyens de verrouillage présentent un évidement (12) dans une surface latérale (3) de l'entretoise (1) vers la deuxième extrémité (8) avec une surface de blocage (13), un cliquet de blocage (34) associé à l'extrémité de raccordement (16) maintenue mobile en pivotement pour l'enclenchement dans l'évidement (12) dans une poche (21) de l'extrémité de raccordement (16), une surface de verrouillage (36) coopérant avec la surface de blocage (13), un ressort (37) qui attaque le cliquet de blocage (34) pour occuper la position d'enclenchement et un organe d'actionnement (38, 43) au moyen duquel le cliquet de blocage (34) est susceptible d'être déplacé pour se dégager de l'évidement (12), **en ce que** l'évidement (12) est en outre réalisé en forme de tronc de cône, et le cliquet de blocage (34) susceptible de pivoter autour d'un axe de pivotement (33) croisant à distance et à angle droit l'axe longitudinal (12a) de l'évidement (12) présente une surface de verrouillage (36) adaptée à la surface enveloppe de l'évidement (12) et servant de surface de blocage (13), **en ce que** l'extrémité de raccordement (16, 16a) est constituée par deux pièces (18, 19) qui sont reliées de façon inséparable l'une à l'autre et qui forment conjointement une chambre (32) ouverte sur un côté qui reçoit la deuxième extrémité (8) de l'entretoise (1), dont la première pièce représente un corps de base (18) qui comprend la poche (21) pour recevoir le cliquet de blocage (34) et les moyens (17) pour la liaison avec un appareil à atteler, et dont la deuxième pièce représente un recouvrement (19) qui possède une surface de butée (30) qui coopère avec une surface terminale (10) à la deuxième extrémité (8) de l'entretoise (1).

2. Ensemble de bras inférieur selon la revendication 1, **caractérisé en ce que** le corps de base (18) est forgé et présente un évidement de montage (23) dans lequel est reçue une bille de montage (24) de manière à pouvoir pivoter vers tous les côtés, qui possède un perçage traversant (25) pour la liaison.

3. Ensemble de bras inférieur selon l'une ou l'autre des revendications 1 et 2, **caractérisé en ce que** le recouvrement (19) est formé en tôle et présente une section en forme de U et une paroi frontale (29) qui possède la surface de butée (30), et **en ce que** le recouvrement (19) est soudé avec le corps de base (18).

4. Ensemble de bras inférieur selon la revendication 1, **caractérisé en ce qu'**il est prévu des évidements de positionnement (9) qui partent de la petite surface (2) de l'entretoise (1) et qui commencent à distance de la surface terminale (10) de l'entretoise (1).

5. Ensemble de bras inférieur selon la revendication 1, **caractérisé en ce que** le cliquet de blocage (34) présente, à son extrémité éloignée de la surface de verrouillage (36), une surface d'appui (35) limitée en section par un arc de cercle et prenant appui avec faculté de pivotement contre une surface de montage correspondante (32) dans la poche (21), et **en ce que** le ressort (37) est réalisé sous forme de ressort à lame et prend appui dans la poche (21) et sur le cliquet de blocage (34) de telle sorte que la surface d'appui (35) est maintenue en contact avec la surface de montage (22).

6. Ensemble de bras inférieur selon la revendication 1, **caractérisé en ce que** des surfaces obliques (11) sont agencées entre la surface terminale (10) de l'entretoise (1) et les petites surfaces (2, 2a).

7. Ensemble de bras inférieur selon l'une des revendications 1 à 6, **caractérisé en ce qu'**une tige de butée (61), traversant la chambre (32) et un évidement de positionnement (9), est fixée sur le corps de base (18) et/ou sur le recouvrement (19).

8. Ensemble de bras inférieur selon la revendication 1, **caractérisé en ce qu'**un arrondi (14) est prévu entre le fond (15) de l'évidement (12) et la surface enveloppe formant la surface de blocage (13).

9. Ensemble de bras inférieur selon la revendication 1, **caractérisé en ce que** le corps de base (16a) et/ou le recouvrement (19a) présentent) des poches de positionnement (62) vers les petites surfaces (2, 2a).

10. Ensemble de bras inférieur selon l'une des revendications 1 à 9, **caractérisé en ce que** la hauteur de l'entretoise (1, 1a) diminue par un gradin vers la surface terminale (10).
